# EUROPEAN PATENT APPLICATION

(11) **EP 0 932 212 A1**
(43) Date of publication of application: **28.07.1999**
(21) Application number: 98936743.8
(22) Date of filing: 11.08.1998
(51) Int. Cl.: H01M 4/62, H01M 10/40

(54) **NONAQUEOUS ELECTROLYTE SECONDARY BATTERY**

(30) Priority: 11.08.1997 JP 21646897; 26.12.1997 JP 36106097
(71) Applicant: Sony Corporation, Tokyo 141-0001 (JP)
(72) Inventor: TSUJIMOTO, Hisashi, Sony Corporation, Tokyo 141-0001 (JP); YAMAHIRA, Takayuki, Sony Energytec Inc., Koriyama-shi, Fukushima-ken 963-0531 (JP); YAMAMOTO, Yoshikatsu, Sony Energytec Inc., Koriyama-shi, Fukushima-ken 963-0531 (JP)
(74) Representative: Müller, Frithjof E., Dipl.-Ing.
(86) International application number: JP9803578
(87) International publication number: WO9908335

(57) **Abstract**

A nonaqueous electrolyte secondary battery is manufactured which contains a binder for powder in a negative electrode thereof, the binder being a mix of fluorine polymer and aromatic vinyl-conjugate diene polymer. The weight mixture ratio of fluorine polymer and the aromatic vinyl-conjugate diene polymer is such that fluorine polymer is not less than one time nor more than 99 times the aromatic vinyl-conjugate diene polymer. The ratio of binder for powder with respect to the negative electrode is not less than 2 wt% nor more than 15 wt%. It is preferable that the binder for powder contains cellulose derivative as a viscosity bodying agent.

## Description

### TECHNICAL FIELD

The present invention relates to a nonaqueous electrolyte secondary battery having a large capacity and a low self-discharge ratio.

### BACKGROUND ART

In recent years, wide use of portable apparatuses, such as video cameras, raises a need for secondary batteries to be employed in place of primary batteries which are disposable batteries because the secondary batteries can repetitively be used. A major portion of secondary batteries available at present are nickel-cadmium batteries each containing an alkali electrolyte. The foregoing batteries each having a voltage of about 1.2 V, however, encounter a difficulty in raising the energy density. Moreover, there arises a problem of an excessively high self-discharge ratio of 20 % or higher per month.

Therefore, a nonaqueous electrolyte secondary battery has been investigated which contain a nonaqueous solvent to serve as the electrolyte and a fight metal, such as lithium, to serve as the negative electrode. Since a high voltage of 3 V or higher can be realized, the foregoing battery has a high energy density and a low self-discharge ratio. However, the above-mentioned secondary battery encounters undesirable contact of metal lithium or the like employed to form the negative electrode with the positive electrode because the metal lithium or the like is grown to a dendrite form owning to repetitive charging and discharging. As a result, short circuit takes place in the inside portion of the battery and the lifetime of the battery is too short to be put to practical use.

Therefore, a nonaqueous electrolyte secondary battery has been investigated in which lithium or the like is alloyed with another metal to use the obtained alloy as the negative electrode of the battery. Also in the foregoing case, the alloy is formed into very fine particles and, therefore, a problem arises in that the lifetime is shortened.

To overcome the above-mentioned problems, a nonaqueous electrolyte secondary battery has been disclosed in, for example, Japanese Patent Laid-Open No. 62-90863. In the foregoing battery, a carbonaceous material, such as cokes, is employed as an active material for the negative electrode. Since the foregoing secondary battery is free from the above-mentioned problems of the negative electrode, an excellent lifetime characteristic against cycle operation can be realized. As suggested by the inventors of the present invention in Japanese Patent Laid-Open No. 63-135099, use of LiₓMO₂ (where M is one or more types of transition metals and x is not less than 0.05 nor more than 1.10) enables a nonaqueous electrolyte secondary battery having an elongated lifetime and a high energy density to be obtained.

However, also the above-mentioned nonaqueous electrolyte secondary battery containing carbon material to serves as the active material for the negative electrode having the high energy density encounters rapid rise in the temperature if an external short circuit takes place in a charged state. Therefore, adverse influences are sometimes exerted on the adjacent electric elements.

The nonaqueous electrolyte secondary battery, which contains the carbonaceous material to serve as the active material for the negative electrode, exhibits a long cycle lifetime and excellent safety as compared with batteries of a type containing metal lithium or the like. However, an improvement in the cycle characteristic even under a heavy load has been required.

### DISCLOSURE OF THE INVENTION

An object of the present invention is to provide a nonaqueous electrolyte secondary battery which is capable of preventing excessive rise in the temperature even if an unintentional external short circuit occurs. Another object of the present invention is to provide a nonaqueous electrolyte secondary battery having an excellent cycle characteristic even under a heavy load.

As a result of energetic investigations performed by the inventors of the present invention, a fact has been found that rise in the temperature occurring when external short circuit takes place can be prevented when a mix of fluorine polymers and aromatic vinyl-conjugate diene polymers is employed in an electrode incorporating a carbonaceous material, a collector and a binder.

That is, a nonaqueous electrolyte secondary battery according to the present invention comprises a binder for powder in a negative electrode, wherein the binder for powder in the negative electrode is a mix of fluorine polymer and aromatic vinyl-conjugate diene polymer.

The nonaqueous electrolyte secondary battery according to the present invention comprises the binder which is the mix of the fluorine polymer and the aromatic vinyl-conjugate diene polymer. Therefore, a capacity required as the battery can be maintained. Moreover, rise in the temperature occurring when an external short circuit takes place can be prevented.

Moreover, the binder for powder contains cellulose derivative to serve as a viscosity bodying agent so that prevention of rise in the temperature occurring when external short circuit takes place and improvement in the cycle characteristic even under a heavy load are realized.

### BRIEF DESCRIPTION OF THE DRAWINGS

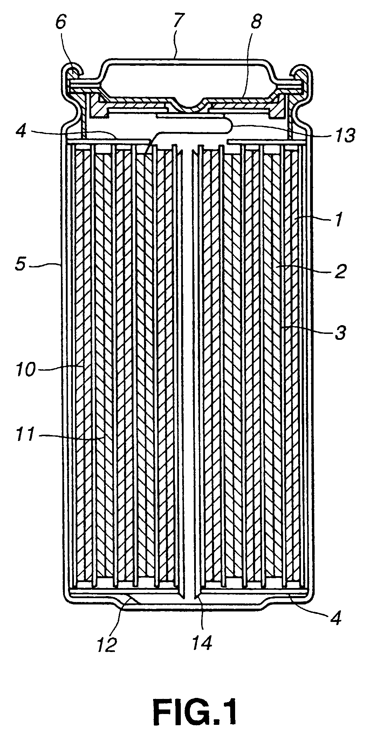

FIG. 1 a side cross sectional view showing a nonaqueous electrolyte secondary battery.

### BEST MODE FOR CARRYING OUT THE INVENTION

A nonaqueous electrolyte secondary battery according to the present invention incorporates a negative electrode, a positive electrode and a nonaqueous electrolyte.

The negative electrode is composed of an active material for the negative electrode, a binder and a collector.

A carbonaceous material for preparing the active material for the negative electrode is not limited particularly. A material, such as petroleum pitch, polymer resin or green cokes, containing resin components is a suitable material. Moreover, any one of the following materials may be employed: graphite which has completely been carbonized, pyrolytic carbon, cokes (coal cokes, pitch cokes or petroleum cokes), carbon black (acetylene black or the like), vitreous carbon, a calcinated organic polymer material (which is obtained by calcinating an organic polymer material at appropriate temperatures not lower than 500°C in an inactive gas flow or in a vacuum), pitch containing carbon fiber and the foregoing resin and resin which can easily be sintered, for example, furan rein, divinyl benzene, polyvinylidene fluoride or vinylidene chloride and with which a mix is prepared, followed by calcinating the mix.

The present invention is characterized in that the binder in the negative electrode is a mix of fluorine polymers and aromatic vinyl-conjugate diene polymer.

When the mix of the fluorine polymer and the aromatic vinyl-conjugate diene polymer is employed as the binder, a capacity required for the battery can be maintained. Moreover, rise in the temperatures of the battery occurring when external short circuit takes place can be prevented. The excellent adhesiveness of the aromatic vinyl-conjugate diene polymer contributes to prevention of the rise in the temperature. When the aromatic vinyl-conjugate diene polymer is mixed with the fluorine polymer, a required capacity is maintained.

For example, one or more types of the following fluorine polymers may be employed: polytetrafluoroethylene, fluorine rubber, tetrafluoroethylene propylene rubber, silicon fluoride rubber, ethylene tetrafluoroperfluoroalkylvinyl ether resin (PFA), ethylene tetrafluoroethylene copolymer resin (ETFE), polychlorotrifluoroethylene (PCTFE) and tetrafluoroethylene hexafluoropropylene copolymer (FEP). The aromatic vinyl-conjugate diene polymer may be styrene-butadiene latex or the like. In addition to usual materials, a material having a hydrogenated terminal, a material having an end modified with a carboxyl group or the like may be employed to obtain a similar effect.

It is preferable that the weight mixture ratio of the fluorine polymer and the aromatic vinyl-conjugate diene polymer is set such that fluorine polymer is not less than one time nor more than 99 times the aromatic vinyl-conjugate diene polymer. The fluorine polymer cannot solely prevent rise in the temperature occurring when short circuit takes place. On the other hand, use of only the aromatic vinyl-conjugate diene polymer results in reduction in the capacity of the battery.

It is preferable that the ratio of the binder for powder with respect to the negative electrode is not less than 2 wt% nor more than 15 wt%. If the content of the binder does not satisfy the foregoing range, the capacity of the battery is undesirably reduced.

It is preferable that the binder for powder contains a cellulose derivative which serves as a viscosity bodying agent.

The cellulose derivative is expressed by the following chemical formula and classified into various types depending on the substitutional group R. 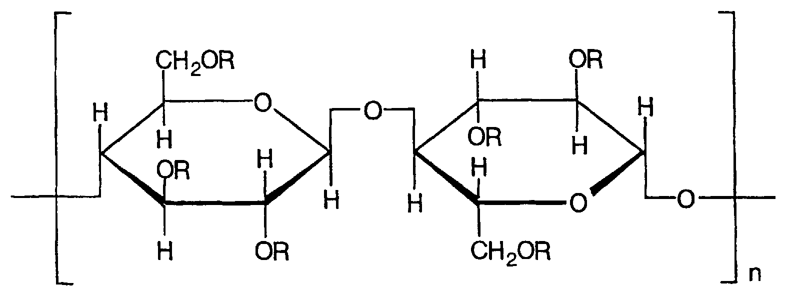 where R is one or more groups selected from H, CH₂COONa, CH₂COOLi, CH₂CH₂OH [CH₂CH (CH₃)₂O]ₘ H (m is an integer not smaller than 1) and CH₂COOH and n is 10 to 10,000.

In this embodiment, the cellulose derivative may be any one of the following materials: methyl cellulose, ethyl cellulose, carboxymethyl cellulose (R in the foregoing formula is CH₂COONa or CH₂COOLi), carboxymethylethyl cellulose and hydroxyethyl cellulose (R in the foregoing formula is CH₂CH₂OH) and hydroxypropyl cellulose (R in the foregoing formula is [CH₂CH (CH₃)₂O]ₘ H).

When the cellulose derivative serving as the viscosity bodying agent is contained in the binder, rise in the temperature of the battery occurring when external short circuit takes place can be prevented. Moreover, the cycle characteristic even under a heavy load can be improved It can be considered that the reason for this lies in a fact that a high liquid retention characteristic of the cellulose derivative contributes to the foregoing effect.

It is preferable that the ratio of the cellulose derivative with respect to the total weight of the negative electrode is not less than 0.1 wt% nor more than 5 wt%. If the content of the cellulose derivative is lower than 0.1 wt%, a satisfactory effect of improving the cycle characteristic under a heavy load cannot be obtained. If the content of the cellulose derivative is higher than 5 wt%, the quantity of the active material is undesirably and correspondingly reduced.

On the other hand, the positive electrode has an active material which contains lithium composite oxide LiₓMO₂ (where M is one or more types of transition metals, preferably any one of Co, Ni and Fe and x satisfies a range 0.005 ≤ x ≤ 1.10). The active material is exemplified by a lithium composite oxide expressed by LiCoO₂, LiNiO₂ or LiNi_{y}Co_{(1-y)}O₂ (where 0.05 ≤ x ≤ 1.10 and 0 < y < 1). Moreover, LiMn₂O₄ may be employed.

The lithium composite oxide can be obtained by mixing a carbonate, such as lithium, cobalt or nickel, in accordance with the composition, and then the mix is calcinated at temperatures in a range from 600°C to 1000°C. Note that the starting material is not limited to the carbonate. The synthesis from hydride or oxide is permitted.

The nonaqueous electrolyte may be an arbitrary material, such as a nonaqueous electrolyte obtained by dissolving an electrolyte in solvent, a material obtained by gelatinizing the foregoing nonaqueous electrolyte (a gel electrolyte) or a material obtained by swelling a polymer material with the foregoing nonaqueous electrolyte (a solid electrolyte).

The nonaqueous electrolyte may be a conventional nonaqueous electrolyte of a type obtained by dissolving an electrolyte in organic solvent. Therefore, the organic solvent is exemplified by ester, such as propylene carbonate, ethylene carbonate or γ-butyl lactone; ether such as diethylether, tetrahydrofuran, substitution tetrahydrofuran, dioxolane, pyran, its derivative, dimethoxyethane or diethoxyethane; 3-substitution-2-oxazolidinone, such as 3-methyl-2-oxazolidione; methylsulfolane; acetonitrile; and propionitrile. One of the foregoing materials may be employed or a mixture of the same may be employed.

The electrolyte may be lithium perchlorate, lithium borofluoride, lithium phosphoflouoride, lithium chloroaluminate, halogenated lithium, trifluoromethane sulfonate or the like.

When the gel electrolyte or the solid electrolyte is employed, a known gelatinizing material or polymer material may be employed. For example, any one of the following materials may be employed: polyvinylidene fluoride, copolymer of vinylidene fluoride and hexafluoropropylene, polyamide, aromatic polyamide, polyolefine, polyester, polycarbonate, polyimide, poly (meta) acrylate, polyacrylonitrile and the like.

Among the foregoing polymers, the polyacrylonitrile polymer (abbreviated as PAN type polymer) having a CN group at the side chain thereof has a high dielectric constant. Therefore, a solid polymer electrolyte having a high ion conductivity can be formed. Acrylonitrile is able to copolymerize with another monomer. Thus, a copolymer with perfluoromethacrylate, various (meta) acrylate, acrylamide, acrylic acid or methacrylic acid may be employed. In particular, it is preferable that a copolymer of (meta) acrylate and a monomer having ethylene oxide at the side chain thereof or a propylene oxide chain is employed.

To prove the effect of the present invention, samples were manufactured and evaluated.

### Sample 1

Initially, a positive electrode 2 was manufactured as follows.

A compound for the positive electrode was prepared such that 0.5 mole of lithium carbonate and 1 mole of cobalt carbonate were mixed with each other, and then the mixture was calcinated in air at 900°C for 5 hours. Thus, LiCoO₂ was obtained. Then, LiCoO₂ was pulverized so that powder having an average particle size of 10 µm was obtained. Then, LiCoO₂ was used as an active material for the positive electrode such that 91 wt% of LiCoO₂, 6 wt% of graphite serving as a conductive material and 3 wt% of polyvinylidene fluoride serving as a binder for the positive electrode were mixed. Thus, a mix for the positive electrode was prepared, and then the mix was dispersed in N-methyl-2-pyrolidone so as to be slurried. Obtained slurry was applied to aluminum which was a collector for the positive electrode and which had a thickness of 20 µm. Then, the slurry was dried, and then a compression molding operation using a roller pressing machine was performed. Thus, an elongated electrode was manufactured.

Then, a negative electrode 1 was manufactured as follows.

A starting material for the active material for the negative electrode was petroleum pitch. Functional groups each containing oxygen was introduced (so-called oxygen crosslinking) by 10 % to 20 %. Then, calcination in an inactive gas was performed at 1000°C so that a non-graphitizing carbon material was obtained which had a characteristic similar to that of a vitreous carbon material. Then, 90 wt% of the obtained carbon material and 10 wt% of polyvinylidene fluoride serving as the binder for the negative electrode were mixed with each other so that a mix for the negative electrode was prepared. Then, the mix was dispersed in N-methyl-2-pyrolidone so as to be slurried. Obtained paste was applied to two sides of copper foil having a thickness of 10 µm, and then paste was dried and compression-molded by a roller pressing machine. Thus, an elongated electrode was manufactured.

Then, as sown in FIG. 1, the thus-obtained negative electrode 1 and positive electrode 2 were sequentially laminated such that a separator 3 in the form of a fine-porous polypropylene film having a thickness of 25 µm was interposed. Then, the laminate was wound many times around a center pin 14 so that an electrode element was manufactured.

The thus-manufactured electrode element was accommodated in a battery can 5. Moreover, an insulating plate 4 was placed on each of the upper and lower electrode element. A positive-electrode lead 13 applied with an insulating tape was drawn out from a positive-pole collector 11 so as to be welded to a safety valve unit 8 conducted with a battery cover 7. Also a negative-electrode lead 12 was drawn out from a negative-electrode collector 10 so as to be welded to the battery can 5.

Then, an electrolyte obtained by dissolving 1 mole/litter LiPF₆ in mixed solution of propylene carbonate and diethyl carbonate was injected into the battery can 5. Then, the battery can 5 was crimped through a sealing gasket 6 so that the safety valve unit 8 and the battery cover 7 were secured. As a result, a cylindrical nonaqueous electrolyte secondary battery having a diameter of 18 mm and a height of 65 mm was manufactured.

### Sample 2

A similar process to that for manufacturing Sample 1 was performed except for the binder for the negative electrode which was styrene butadiene latex (hereinafter called "SBR type latex") employed in place of polyvinylidene fluoride. Thus, a cylindrical nonaqueous electrolyte secondary battery was manufactured.

### Sample 3

A similar process to that for manufacturing Sample 1 was performed except for the binder for the negative electrode which was a mix of polyvinylidene fluoride and SBR type latex at a mixture ratio of 5.0:5.0. Thus, a cylindrical nonaqueous electrolyte secondary battery was manufactured.

### Sample 4

A similar process to that for manufacturing Sample 1 was performed except for the binder for the negative electrode which was a mix of polyvinylidene fluoride and SBR type latex at a mixture ratio of 7.0:3.0. Thus, a cylindrical nonaqueous electrolyte secondary battery was manufactured.

### Sample 5

A similar process to that for manufacturing Sample 1 was performed except for the binder for the negative electrode which was a mix of polyvinylidene fluoride and SBR type latex at a mixture ratio of 8.0:2.0. Thus, a cylindrical nonaqueous electrolyte secondary battery was manufactured.

### Sample 6

A similar process to that for manufacturing Sample 1 was performed except for the binder for the negative electrode which was a mix of polyvinylidene fluoride and SBR type latex at a mixture ratio of 9.0:1.0. Thus, a cylindrical nonaqueous electrolyte secondary battery was manufactured.

### Sample 7

A similar process to that for manufacturing Sample 1 was performed except for the binder for the negative electrode which was a mix of polyvinylidene fluoride and SBR type latex at a mixture ratio of 9.9:0.1. Thus, a cylindrical nonaqueous electrolyte secondary battery was manufactured.

### Sample 8

A similar process to that for manufacturing Sample 1 was performed except for the binder for the negative electrode which was a mix of polyvinylidene fluoride and SBR type latex at a mixture ratio of 5.0:5.0 and the content of the binder for the negative electrode which was 1 %. Thus, a cylindrical nonaqueous electrolyte secondary battery was manufactured.

### Sample 9

A similar process to that for manufacturing Sample 1 was performed except for the binder for the negative electrode which was a mix of polyvinylidene fluoride and SBR type latex at a mixture ratio of 5.0:5.0 and the content of the binder for the negative electrode which was 2 %. Thus, a cylindrical nonaqueous electrolyte secondary battery was manufactured.

### Sample 10

A similar process to that for manufacturing Sample 1 was performed except for the binder for the negative electrode which was a mix of polyvinylidene fluoride and SBR type latex at a mixture ratio of 5.0:5.0 and the content of the binder for the negative electrode which was 5 %. Thus, a cylindrical nonaqueous electrolyte secondary battery was manufactured.

### Sample 11

A similar process to that for manufacturing Sample 1 was performed except for the binder for the negative electrode which was a mix of polyvinylidene fluoride and SBR type latex at a mixture ratio of 5.0:5.0 and the content of the binder for the negative electrode which was 15 %. Thus, a cylindrical nonaqueous electrolyte secondary battery was manufactured.

### Sample 12

A similar process to that for manufacturing Sample 1 was performed except for the binder for the negative electrode which was a mix of fluorine rubber (vinylidene fluoride-propylene hexafluoride copolymer) and SBR type latex at a mixture ratio of 5.0:5.0. Thus, a cylindrical nonaqueous electrolyte secondary battery was manufactured.

### Sample 13

A similar process to that for manufacturing Sample 1 was performed except for carboxymethyl cellulose (expressed as "CMC" in the table) which was added as the viscosity bodying agent for the negative electrode by 0.1 wt%. Thus, a cylindrical nonaqueous electrolyte secondary battery was manufactured.

### Sample 14

A similar process to that for manufacturing Sample 1 was performed except for carboxymethyl cellulose which was added as the viscosity bodying agent for the negative electrode by 1.0 wt%. Thus, a cylindrical nonaqueous electrolyte secondary battery was manufactured.

### Sample 15

A similar process to that for manufacturing Sample 1 was performed except for carboxymethyl cellulose which was added as the viscosity bodying agent for the negative electrode by 3.0 wt%. Thus, a cylindrical nonaqueous electrolyte secondary battery was manufactured.

### Sample 16

A similar process to that for manufacturing Sample 1 was performed except for carboxymethyl cellulose which was added as the viscosity bodying agent for the negative electrode by 5.0 wt%. Thus, a cylindrical nonaqueous electrolyte secondary battery was manufactured.

### Sample 17

A similar process to that for manufacturing Sample 1 was performed except for carboxymethyl cellulose which was added as the viscosity bodying agent for the negative electrode by 10 wt%. Thus, a cylindrical nonaqueous electrolyte secondary battery was manufactured.

### Sample 18

A similar process to that for manufacturing Sample 1 was performed except for hydroxyethyl cellulose (expressed as "HEC" in the table) which was added as the viscosity bodying agent for the negative electrode by 1.0 wt%. Thus, a cylindrical nonaqueous electrolyte secondary battery was manufactured.

### Characteristic Test

The thus-manufactured cylindrical nonaqueous electrolyte secondary battery according to Samples 1 to 12 were charged and discharged under the following conditions. Thus, the initial capacity and rise in the temperature occurring when external short circuit takes place in a charged state were measured. Results were shown in Tables 1 to 3.

The thus-manufactured cylindrical nonaqueous electrolyte secondary battery according to Samples 1 and Samples 13 to 18 were charged and discharged 100 cycles under the following conditions. Thus, the initial capacity and a capacity retention ratio at the 100 cycles were measured. The discharging condition at this time corresponded to a 0.5-hour discharge ratio. That is, the foregoing test was a cycle test of discharge under a heavy load. Results were shown in Tables 4 and 5.

### Conditions:

Charging: 4.2 V max. 1 A constant current (charged with a constant current until 4.2 V and charged with a constant voltage after the voltage was raised to 4.2 V).
Discharging: 3.0 Vcutoff, 0.7 A constant current
External resistance: 20 mΩ

**[Table 1]**

| | Content of Binder (wt%) | Mixture Ratio of Binder (with respect to 10 which was the overall quantity) | | Initial Capacity (mAh) | Highest Temperature At Short Circuit (°C) |
|---|---|---|---|---|---|
| | | Ratio of PVDF | Ratio of SBR | | |
| Sample 3 | 10 | 5.0 | 5.0 | 1349 | 69 |
| Sample 4 | 10 | 7.0 | 3.0 | 1350 | 71 |
| Sample 5 | 10 | 8.0 | 2.0 | 1352 | 70 |
| Sample 6 | 10 | 9.0 | 1.0 | 1351 | 76 |
| Sample 7 | 10 | 9.9 | 0.1 | 1351 | 83 |
| Sample 1 | 10 | 10.0 | 0.0 | 1353 | 95 |
| Sample 2 | 10 | 0.0 | 10.0 | 1206 | 66 |

**[Table 2]**

| | Content of Binder (wt%) | Mixture Ratio of Binder (with respect to 10 which was the overall quantity) | | Initial Capacity (mAh) | Highest Temperature At Short Circuit (°C) |
|---|---|---|---|---|---|
| | | Ratio of PVDF | Ratio of SBR | | |
| Sample 9 | 2 | 5.0 | 5.0 | 1244 | 58 |
| Sample 10 | 5 | 5.0 | 5.0 | 1327 | 68 |
| Sample 3 | 10 | 5.0 | 5.0 | 1349 | 69 |
| Sample 11 | 15 | 5.0 | 5.0 | 1311 | 67 |
| Sample 8 | 1 | 5.0 | 5.0 | 673 | 40 |

**[Table 3]**

| | Content of Binder (wt%) | Mixture Binder (with to 10 which overall quantity) | Ratio of respect was the | Initial Capacity (mAh) | Highest Temperature At Short Circuit (°C) |
|---|---|---|---|---|---|
| | | Ratio of Fluorine Rubber | Ratio of SBR | | |
| Sample 12 | 10 | 5.0 | 5.0 | 1296 | 65 |

**[Table 4]**

| | Content of CMC (wt%) | Content of Binder (wt%) | Mixture Ratio of Binder (with respect to 10 which was the overall quantity) | | Initial Capacity (mAh) | Capacity Retention Ratio (%) |
|---|---|---|---|---|---|---|
| | | | Ratio of PVDF | Ratio of SBR | | |
| Sample 3 | 0 | 10 | 5 | 5 | 1349 | 83 |
| Sample 13 | 0.1 | 10 | 5 | 5 | 1350 | 85 |
| Sample 14 | 1 | 10 | 5 | 5 | 1339 | 88 |
| Sample 15 | 3 | 10 | 5 | 5 | 1321 | 87 |
| Sample 16 | 5 | 10 | 5 | 5 | 1303 | 88 |
| Sample 14 | 10 | 10 | 5 | 5 | 1227 | 87 |

**[Table 5]**

| | Content of HEC (wt%) | Content of Binder (wt%) | Mixture Ratio of Binder (with respect to 10 which was the overall quantity) | | Initial Capacity (mAh) | Capacity Retention Ratio (%) |
|---|---|---|---|---|---|---|
| | | | Ratio of PVDF | Ratio of SBR | | |
| Sample 18 | 1 | 10 | 5 | 5 | 1336 | 88 |

As can be understood from Table 1, batteries (Samples 3 to 7) in which the mixture ratio of polyvinylidene fluoride and SBR type latex constituting the binder was 5.5 to 9.9:0.1 when the content of the binder with respect to the negative electrode was 10 wt% had large initial capacities of 1349 mAh to 1352 mAh. Moreover, a low highest temperature of 69°C to 83°C at the short circuit was observed. Thus, the foregoing batteries had structures suitable for the binder. The battery (Sample 1) containing the binder composed of only polyvinylidene fluoride had a large initial capacity of 1353 mAh. However, the highest temperature at the short circuit was 95°C which was an excessively high temperature. The battery (Sample 2) containing the binder composed of only SBR type latex had a low highest temperature at the short circuit of 66°C. However, the initial capacity was too small which was 1206 mAh.

As can be understood from Table 2, the batteries (Sample 3 and Samples 9 to 11) in which the binder was contained by 2 wt% to 15 wt% with respect to the negative electrode when the mixture ratio of polyvinylidene fluoride and SBR type latex was 5.0:5.0 had large initial capacities of 1244 mAh to 1349 mAh. Moreover, low highest temperatures of 58°C to 69°C at short circuit were realized as the structure of the binder. On the other hand, the battery (Sample 8) containing the binder by 1 wt% had a low highest temperature of 40°C at short circuit. However, the initial capacity was 673 mAh was too small.

As can be understood from Table 3, also the battery (Sample 12) containing the binder composed of fluorine rubber and SBR type latex (at a mixture ratio: 5.0:5.0) had a large initial capacity of 1296 mAh. Moreover, a low highest temperature at short circuit of 65°C was realized. Therefore, the foregoing structure was suitable for the binder.

As can be understood from Table 4, the battery (Samples 13 to 16) containing the viscosity bodying agent was carboxymethyl cellulose added by 0.1 wt% to 5 wt% had large initial capacities of 1303 mAh to 1350 mAh. As compared with the battery (Sample 3) to which carboxymethyl cellulose was not added, large capacity retention ratios of 85 % to 88 % were realized. Thus, the cycle characteristic under a heavy load was improved. On the other hand, the battery (Sample 17) containing the viscosity bodying agent which was carboxymethylcellulose by 10 wt% encountered reduction in the active material correspondingly. Therefore, a too small initial capacity of 1227 mAh was realized.

As can be understood from Table 5, the battery (Sample 18) containing the viscosity bodying agent which was hydroxyethyl cellulose added by 1.0 wt% had a large initial capacity of 1336 mAh and a high capacity retention ratio of 88 %. Therefore, the cycle characteristic under a heavy load was improved.

As can be understood from the above-mentioned results, the structure according to the present invention is able to prevent rise in the temperature occurring when short circuit takes place while a satisfactorily large capacity is being maintained. The reason for this can be considered that the excellent adhesiveness of SBR type latex contributes to prevention of the rise in the temperature. Moreover, mixture with polyvinylidene fluoride enables a large capacity to be maintained.

Since cellulose derivative, such as carboxymethyl cellulose or hydroxyethyl cellulose, serving as the viscosity bodying agent is added to the binder, the cycle characteristic under a heavy load can be improved. The reason for this is considered that the satisfactory liquid retention characteristic of the cellulose derivative contributes to the improvement.

### Sample 19

In this example, graphite was employed in the negative electrode.

That is, the negative electrode of Sample 1 was changed to artificial graphite so that Sample 19 was manufactured.

The active material for the negative electrode was artificial graphite obtained by processing pitch cokes at a temperature of 2800°C. The obtained artificial graphite was in the form of particles having an average particle size of 30 µm, Lc of 85 and d002 of 3.336 Å.

Then, 90 wt% of the obtained carbon material, 5 wt% of polyvinylidene fluoride serving as the binder and 5 wt% of SBR type latex were mixed. Then, 1 wt% of CMC (carboxymethyl cellulose) was added so that a mix for the negative electrode was prepared. Then, the mix was dispersed in N-methyl-2-pyrolidone so as to be slurried.

Obtained slurry was applied to the two sides of rolled copper foil serving as a collector for the negative electrode and having a thickness of 10 µm. Then, the slurry was dried, and then a compression molding operation using a roller pressing machine was performed. Thus, an elongated electrode was manufactured.

The thus-manufactured elongated electrode was employed. Moreover, a mix was obtained by dissolving, at a ratio of 1.5 moles/liter, LiPF₆ in solvent obtained by mixing ethylene carbonate, propylene carbonate, diethyl carbonate and dimethyl carbonate at ratios 2:1:2:5. The mix was employed as the electrolyte. The other operations similar to those for manufacturing Sample 1 were performed so that a battery having a diameter of 18 mm and a height of 65 mm was manufactured.

### Sample 20

In this example, the viscosity bodying agent was hydroxypropyl cellulose. A process similar to that for manufacturing Sample 19 was

performed to manufacture a battery except for the viscosity bodying agent which was hydroxypropyl cellulose employed in place of CMC.

### Sample 21

In this example, the viscosity bodying agent was electrolytic copper foil.

A process similar to that for manufacturing Sample 19 was performed to manufacture a battery except for the collector for the negative electrode which was electrolytic copper foil which had the same thickness as that of rolled copper foil and which was employed in place of the rolled copper foil.

### Sample 22

In this example, the positive electrode was a nickel material.

Initially, the nickel type positive electrode was manufactured as follows.

A compound for the positive electrode was obtained such that 1 mole of lithium hydroxide, 0.8 mole of nickel hydroxide and 0.2 mole of cobalt hydroxide were mixed, followed by calcinating the mix at 800°C for 5 hours in an oxygen atmosphere. Thus, LiNi_{0.8}Co_{0.2}O₂ was obtained.

Obtained LiNi_{0.8}Co_{0.2}O₂ was pulverized by a bowl mill so that powder having an average particle size of 10 µm was obtained.

Then, 91 parts by weight of LiNi_{0.8}Co_{0.2}O₂, 6 parts by weight of graphite serving as a conductive material and 3 parts by weight of polyvinylidene fluoride serving as a binder were mixed. Then, N-methyl-pyrolidone serving as a dispersant was added so that paste was prepared. The paste was dried, and then obtained slurry was applied to aluminum foil which was a collector for the positive electrode and which had a thickness of 20 µm. Then, the slurry was dried, and then compression molding using a roller pressing machine was performed. Thus, an elongated electrode was manufactured.

The negative electrode was manufactured similar to Sample 19 so that a battery similar to that according to Sample 19 was manufactured.

### Sample 23

In this example, a material was obtained by adding another type resin component to SBR type latex.

Although the SBR according to Sample 19 had a composition that styrene : butadiene : the other resin component = 40:60:0, the composition according to this example was such that styrene : butadiene : the other resin component = 35:30:35. The other operations were similar to that for manufacturing Sample 19 so that a battery was manufactured.

### Sample 24

A process similar to that for manufacturing Sample 19 was performed to manufacture a battery except for CMC which was omitted from the binder for the negative electrode of the Sample 19.

### Characteristic Test

The thus-manufactured cylindrical nonaqueous electrolyte secondary batteries according to Samples 19 to 24 were charged and discharged 100 cycles under the following condition. Then, the initial capacities and capacity retention ratios after the 100 cycles were completed were measured. Results were shown in Table 6.

### Conditions:

Charging: 4.2 Vmax. 1 A constant current (charged with a constant current until 4.2 V and charged with a constant voltage after the voltage was raised to 4.2 V).
Discharging: 3.0 Vcutoff, 3 A constant current

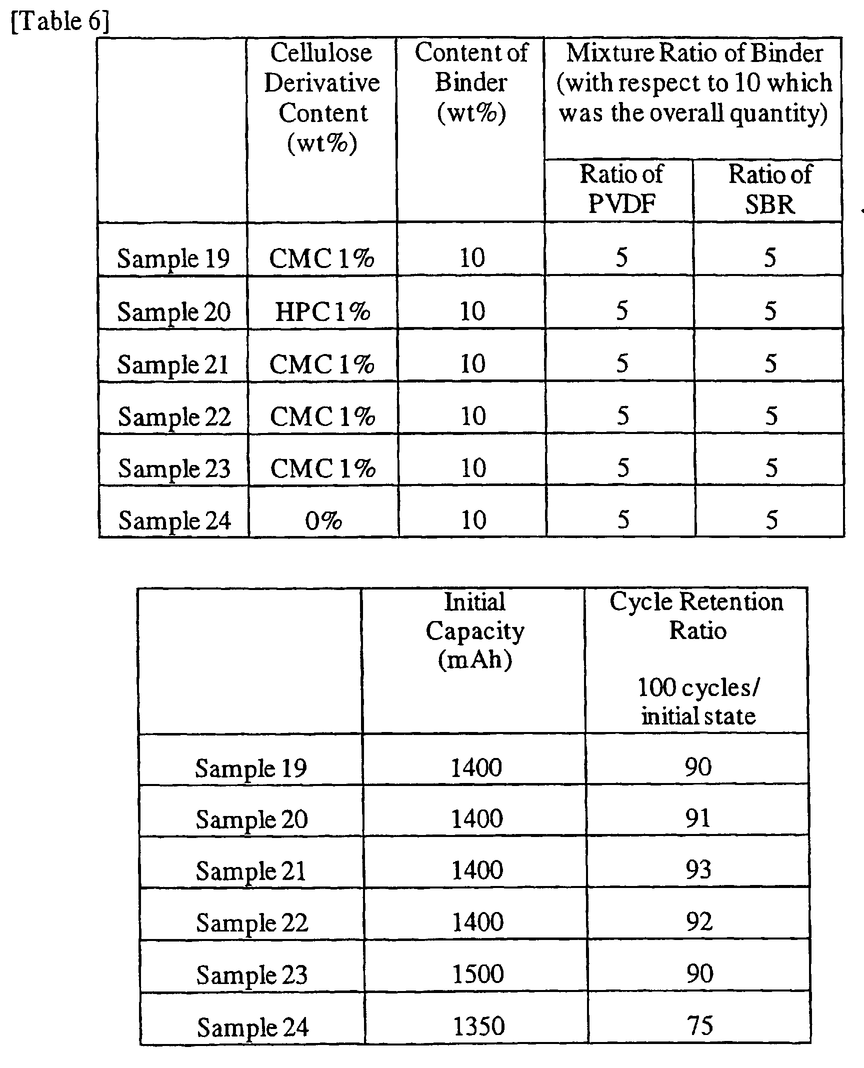

As can be understood from the foregoing results, Samples 19 to 23 according to the examples of the present invention had excellent charging/discharging efficiency and cycle characteristic. The reason why the cycle characteristic was improved as compared with Sample 24 in which CMC was not added lies in that addition of fibrous molecules, such as CMC, caused SBR and CMC to be mixed and adhesion to be performed without deterioration in the reactiveness of the surfaces of the carbon portions.

Although the cylindrical nonaqueous electrolyte secondary batteries were manufactured in the foregoing examples of the present invention, similar effects can be obtained when the present invention is applied to batteries having another shape, for example, a rectangular shape, a laminate shape or a card shape.

Note that teflon or the like may be employed as the fluorine binder.

## Claims

1. A nonaqueous electrolyte secondary battery comprising: a binder for powder in a negative electrode, wherein said binder for powder contains a mix of fluorine polymer and aromatic vinyl-conjugate diene polymer.

2. A nonaqueous electrolyte secondary battery according to claim 1, wherein the fluorine polymer is at least one type of materials selected from a group consisting of polyvinylidene fluoride, polytetrafluoroethylene and fluorine rubber.

3. A nonaqueous electrolyte secondary battery according to claim 1, wherein the aromatic vinyl-conjugate diene polymer is styrene-butadiene latex.

4. A nonaqueous electrolyte secondary battery according to claim 1, wherein a weight mixture ratio of fluorine polymer and aromatic vinyl-conjugate diene polymer is such that fluorine polymer is not less than one time nor more than 99 times the aromatic vinyl-conjugate diene polymer.

5. A nonaqueous electrolyte secondary battery according to claim 1, wherein a ratio of said binder for powder with respect to the total weight of said negative electrode is not less than 2 wt% nor more than 15 wt%.

6. A nonaqueous electrolyte secondary battery according to claim 1, wherein said binder for powder contains cellulose derivative as a viscosity bodying agent.

7. A nonaqueous electrolyte secondary battery according to claim 6, wherein a ratio of said cellulose derivative with respect to the total weight of said negative electrode is not less than 0.1 wt% nor more than 5 wt%.

8. A nonaqueous electrolyte secondary battery according to claim 1, wherein a carbonaceous material is contained as an active material for said negative electrode.

9. A nonaqueous electrolyte secondary battery according to claim 8, wherein said carbonaceous material is a non-graphitizing carbon material.

10. A nonaqueous electrolyte secondary battery according to claim 8, where in said carbonaceous material is graphite.

11. A nonaqueous electrolyte secondary battery according to claim 1, wherein LiMₓO₂ (where M is one or more types of transition metals and 0.05 ≤ x ≤ 1.10) is contained as an active material for said positive electrode.
